# EUROPEAN PATENT SPECIFICATION

(11) **EP 1 201 535 B1**
(45) Date of publication and mention of the grant of the patent: **27.06.2007**
(21) Application number: 01125560.1
(22) Date of filing: 25.10.2001
(51) Int. Cl.: B62M 9/02, B62M 7/12

(54) **Vehicle transmission**
Fahrzeuggetriebe
Transmission de véhicule

(30) Priority: 27.10.2000 JP 2000328442; 14.11.2000 JP 2000347054; 14.11.2000 JP 2000347053; 14.11.2000 JP 2000347052
(43) Date of publication of application: 02.05.2002
(73) Proprietor: YAMAHA HATSUDOKI KABUSHIKI KAISHA, Iwata-shi, Shizuoka-ken (JP)
(72) Inventor: Isaka, Yoshiharu, Yamaha Hatsudoki Kabushiki K., Iwata-shi, Shizuoka-ken (JP)
(74) Representative: Grünecker, Kinkeldey, Stockmair & Schwanhäusser Anwaltssozietät

(56) References cited:
- EP-A- 0 257 646
- EP-A- 0 604 936
- EP-A- 1 020 350
- GB-A- 2 342 688
- US-A- 4 655 732
- US-A- 4 950 212
- US-A- 5 776 023

## Description

The present invention relates to a vehicle transmission for installation on, for example, a scooter, and more particularly to a belt transmission for use on a motorcycle fitted with an engine of a small displacement which uses a resin belt and is applicable to vehicle automatic transmissions.

Conventionally, an automatic transmission of a motorcycle such as a scooter is incorporated in a transmission case of a unit swinging power unit. The automatic transmission comprises a drive pulleys mounted on a crankshaft of an engine, a follower pulley mounted on an output shaft on a rear wheel side and a V-belt extended between the two pulleys so as to be wrapped there around. Each of the drive pulley and follower pulley is composed of a stationary sheave prohibited from moving in its axial direction and a movable sheave allowed to move in the axial direction.

In an automatic transmission of this type, the wrap contact diameters of the V-belt are designed to be varied by a speed change mechanism provided on the drive pulley according to the rotating speed of the crankshaft. The speed change mechanism is constituted by a cam surface formed at an axial end of the movable pulley in such a manner as to extend in a radial direction and a centrifugal weight adapted to move on the cam surface in radial directions of the movable sheave. According to this speed change mechanism, the movable sheave approaches the stationary sheave when the centrifugal weight is forced to move radially outwardly of the movable sheave by virtue of centrifugal force, whereby the wrap contact diameter of the V-belt is increased.

In addition, continuously variable belt transmissions are equipped on some of conventional motorcycles fitted with engines of small displacements. In this continuously variable belt transmission, a rubber annular belt is extended between a drive pulley to which the driving force of the crankshaft of the engine is transmitted and a follower pulley coupled to a rear wheel in such a manner as to be wrapped therearound. Therefore the driving force of the crankshaft is transmitted to the rear wheel via the belt, a gap between a pair of plates on each pulley for holding the belt therebetween is varied to vary the rotating speed of the crankshaft for transmission to the rear wheel.

In general a rubber V-belt is used for motorcycles outputting small engine torque, but in the conventional vehicle automatic transmission constructed as described above, there is a limitation to increase in torque to be transmitted due to the slippage of the V-belt. It is conceived to use a metallic belt that is used in an automotive continuously variable transmission (CVT) instead of the rubber V-belt in order to increase torque to be transmitted. This CVT belt adopts a construction in which a number of metallic elements are connected to each other via rings.

With the aforesaid CVT belt, however, contact portions between the metallic elements and pulleys must be lubricated. Therefore, the belt must be operated in oil, and moreover, the movable sheave must be pressed with hydraulic pressure in order to increase friction force, which is reduced by the lubrication.

Due to this, adopting the CVT belt for a motorcycle transmission enlarges the unit swinging power unit and narrows the bank angle.

In addition, since a hydraulic pump for generating the hydraulic pressure must be driven by the engine, the fuel efficiency is reduced by an extent to which the power of the engine is used for driving the pump. Further, since an engine for use on a scooter outputs less when compared with an engine used on an automobile, in cooperation with increase in weight due to the enlargement of the power unit, the driving performance is also reduced.

When realizing a dry automatic transmission, there exists a problem of cooling a dry belt which is heated to a high temperature due to friction.

This problem of increased temperature is caused by the facts that the transmission must be accommodated within the transmission case of the unit swinging power unit and that space formed around the transmission is reduced when compared with a case in where such a transmission is installed in an automobile. In case the belt cannot be cooled, the durability of the belt is drastically reduced.

Namely, since the belt is made from rubber in the conventional technique, there are caused problems that the belt becomes easy to be worn and the durability thereof gets low and that the belt is easy to be deteriorated by heat generated when the rubber belt is deformed.

Document GB 2342688 constitutes the closest prior art and is discloses all the features of the preamble of independent claim 1.

The present invention as disclosed by the features of independent claim 1, was made with a view to solving these problems, and it is an objective of the present invention to miniaturize a vehicle transmission while trying to increase torque to be transmitted.

This objective is solved in an inventive manner by a belt transmission having the features of claim 1.

Accordingly, there is provided a belt transmission for use on a motor cycle, comprising a drive pulley comprising a stationary and a moveable sheave and movable relative to the stationary sheave in an axial direction of the drive pulley. driven by an engine, a follower pulley connected to a drive wheel and an annular-shaped dry belt wrapped around the drive pulley and the follower pulley, wherein the annular-shaped dry belt comprises a plurality of elements made from synthetic resin which are coupled with one another, the dry belt comprises at lease one ring member for connecting the elements, and said stationary and moveable sheave are made of aluminium.

Accordingly, the dry belt of the dry transmission is constructed by using resin elements instead of the metallic elements for the CVT belt so as to miniaturize the power unit and to improve the torque transmission.

This invention is particularly applicable to automatic transmissions.

According to a further preferred embodiment, the transmission is a continuously variable transmission

Accordingly, heat from the synthetic resin elements becomes easy to be transmitted to the drive pulley so that the heat so transmitted is dissipated to space on the periphery of the drive pulley when it rotates.

Thus, durability of the belt and suppression of the generation of heat can be improved and it is ensured that a dry belt comprising synthetic resin elements is cooled.

In the present belt transmission, it is preferable if there is provided a speed change mechanism including a cam surface formed on the movable sheave and at least one centrifugal roller brought into contact with the cam surface, wherein an outer circumferential portion of the centrifugal roller and the elements of the dry belt are made of the same synthetic resin material.

Thus, both the centrifugal roller and elements become difficult to be deformed, thereby increasing the heat dissipating qualities.

According to a preferred embodiment, there is provided a belt transmission comprising a drive pulley driven by an engine, a follower pulley connected to a drive wheel, a dry annular belt wrapped around the drive pulley and the follower pulley, a transmission case accommodating therein the drive pulley, the follower pulley and the dry belt and a sound absorbing material disposed along an internal surface of the transmission case, wherein the dry belt comprises a plurality of elements that are made from synthetic resin and are coupled with one another so as to be annular-shaped.

It is preferable if the sound absorbing material is disposed between the follower pulley and the drive pulley, and/or in the vicinity of the follower pulley, and/or around the follower pulley.

According to this preferred embodiment, there is provided a belt transmission in which a driving force from a crankshaft of an engine is changed in speed via a belt extended between a drive pulley and a follower pulley in such a manner as to be wrapped there around for transmission to a rear wheel, the drive pulley is formed of an aluminum material, whereas the belt comprises a number of resin blocks made from polyamide resin which are connected to each other.

According to another preferred embodiment, there is provided a belt automatic transmission comprising a drive pulley driven by an engine, a follower pulley connected to a drive wheel, a dry annular belt wrapped around the drive pulley and the follower pulley, a transmission case accommodating therein the drive pulley, the follower pulley and the dry belt and a chamber portion connected to the transmission case at a position in the vicinity of the follower pulley, wherein the dry belt comprises a plurality of elements that are made from synthetic resin and are coupled with one another so as to be annular-shaped a transmission case accommodating therein the drive pulley, the follower pulley and the dry belt, one of an inlet port and a discharge port communicating with the interior of the transmission case is formed on the chamber portion, and the other is formed on the transmission case at a position in the vicinity of the drive pulley.

It is preferable if the discharge port is formed on the chamber portion, and the inlet port is formed on the transmission case.

It is further preferable if the chamber portion further comprises a first chamber having the discharge port formed therein and disposed on an upper side of the transmission case and a second chamber connected to the transmission case at a position in the vicinity of the drive pulley and having an inlet port that supplies outside air into the transmission case, wherein the second chamber is disposed on the upper side of the transmission case.

In addition to the above construction, it is preferable that a surface treatment for providing hardwearing properties is applied to a pair of pulley plates of the drive pulley adapted to hole the belt therebetween.

In addition to the above construction, the plurality of elements are made of polyamide resin.

Further preferred embodiments are laid down in further dependent claims.

In the following, the present invention is explained in greater detail with respect to several embodiments thereof in conjunction with the accompanying drawings, wherein:
- Fig. 1: is a side view of a scooter type motorcycle incorporating therein a vehicle automatic transmission according to a first embodiment;
- Fig. 2: is an enlarged cross-sectional view showing a drive pulley portion of a unit swinging power unit;
- Fig. 3: is an enlarged cross-sectional view showing a follower pulley portion of a unit swinging power unit;
- Fig. 4: is a cross-sectional view of a dry belt;
- Fig. 5: is a cross-sectional view taken along the line V-V in Fig. 4;
- Fig. 6: is a graph showing a relationship between axial torque and slip ratio;
- Fig. 7: is a side view of a motorcycle according to a second embodiment;
- Fig. 8: is a cross-sectional view of the unit swinging engine;
- Fig. 9: is a cross-sectional view of a belt for use in the belt transmission according to the second embodiment;
- Fig. 10: is a cross-sectional view of the belt taken along the line A-A in Fig. 9 for use in the belt transmission according to the second embodiment;
- Fig. 11: is a side view of the belt for use in the belt transmission according to the second embodiment; and
- Fig. 12: is a cross-sectional view, corresponding to Fig. 8, of the modification of the second embodiment.

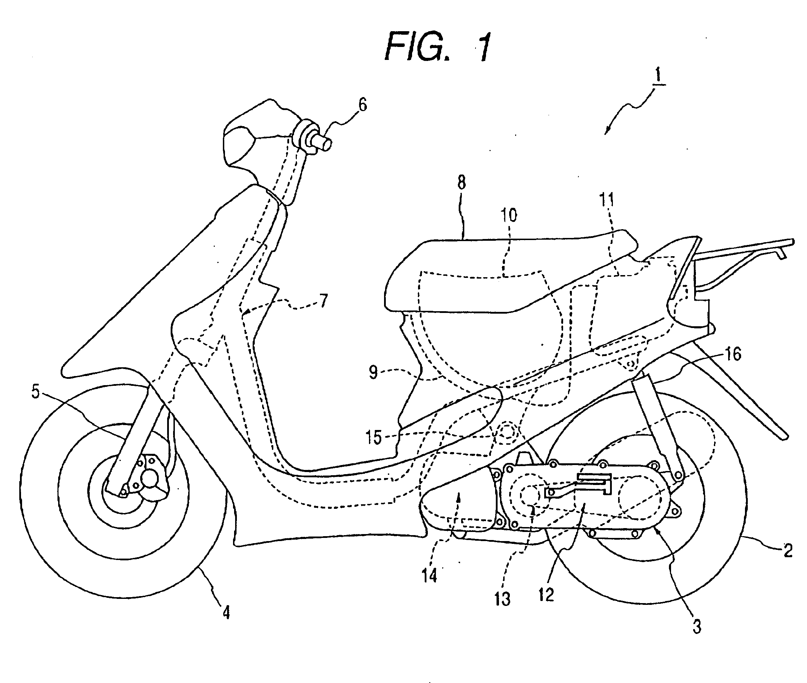

Referring to Figs. 1 to 6, a vehicle automatic transmission according to a first embodiment will be described in detail below. Here, an embodiment will be described in which a vehicle automatic transmission according to this embodiment is applied to a scooter type motorcycle.

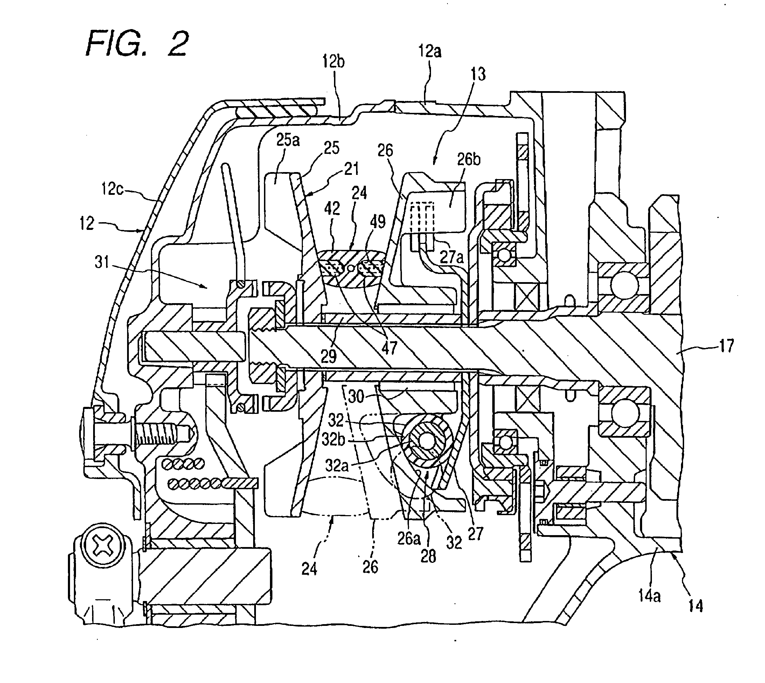

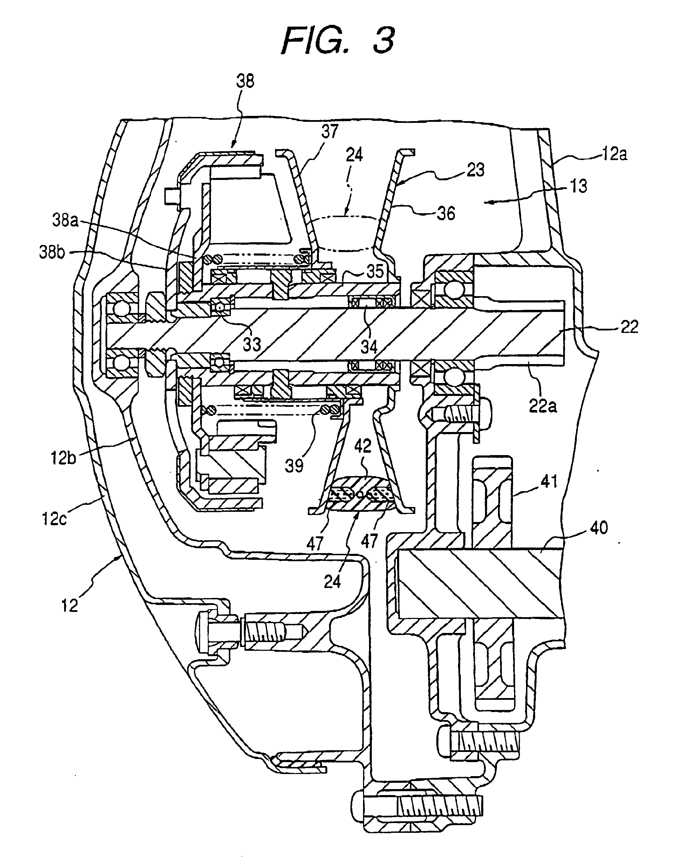

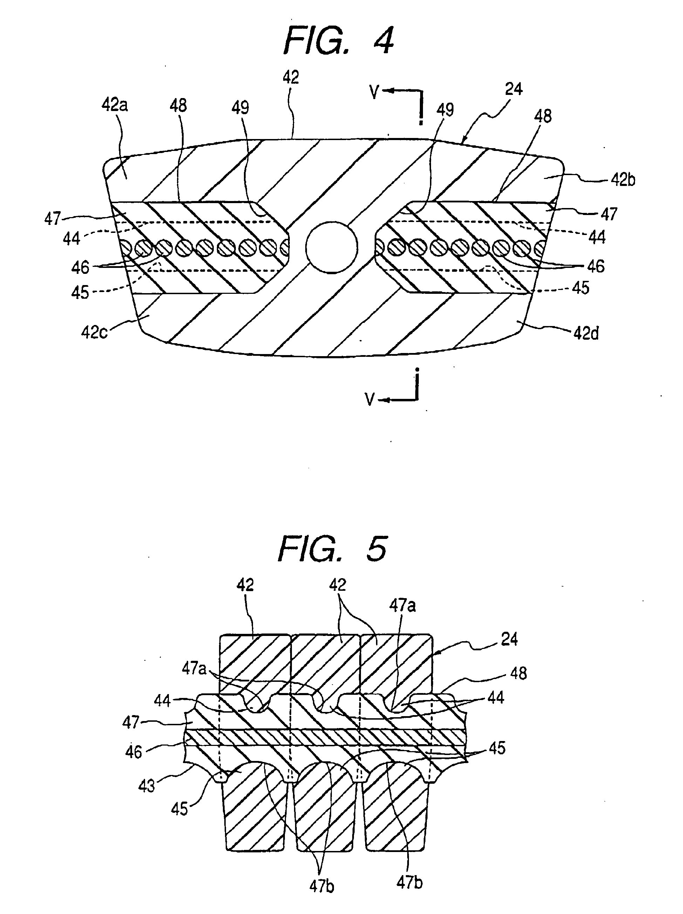

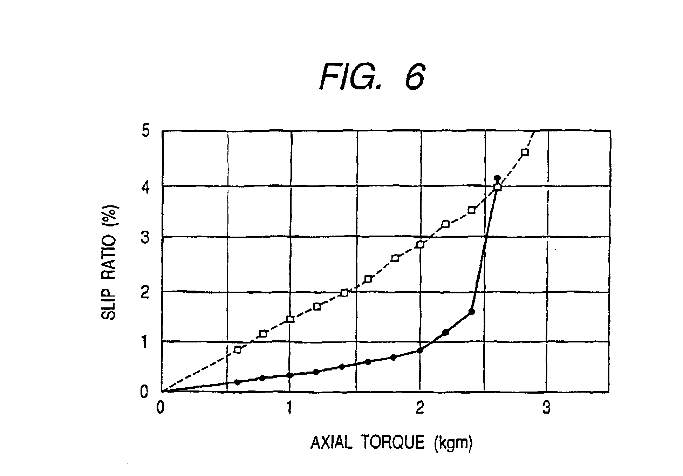

Fig. 1 is a side view of a scooter type motorcycle installing therein a vehicle automatic transmission according to the first embodiment, Fig. 2 is an enlarged cross-sectional view of a drive pulley portion of a unit swinging power unit, and Fig. 3 is an enlarged cross-sectional view of a follower pulley portion of the unit swinging power unit. Fig. 4 is a cross-sectional view of a dry belt, Fig. 5 is a cross-sectional view taken along the line V-V in Fig. 4, and Fig. 6 is a graph showing a relationship between axial torque and slip ratio.

In these figures, reference numeral 1 denotes a scooter type motorcycle according to the first embodiment. This motorcycle 1 adopts a construction in which a rear wheel 2 is driven by a unit swinging power unit 3. In Fig. 1, reference numeral 4 denotes a front wheel, reference numeral 5 a front fork, reference numeral 6 a steering handlebar, reference numeral 7 a body frame, reference numeral 8 a seat, reference numeral 9 a storage box below the seat, reference numeral 10 a helmet stored in the storage box 9, and reference numeral 11 a fuel tank.

The unit swinging power unit 3 adopts a construction corresponding to a conventionally well known construction except that a drive pulley and a belt of an automatic transmission 13 accommodated in a transmission case 12 are different as will be described later. In this power unit 3, an engine 14 is arranged in such a manner that a cylinder extends to the front of the body and the power unit 3 is supported on the body frame 7 by a support shaft 15 at a front portion thereof where the engine 14 is provided in such a manner as to swing vertically. The rear wheel 2 is rotatably provided at a rear end portion of the transmission case 12 which extends from an end portion of the engine 14 on the left-hand side of the body toward the rear of the body. A cushion unit 16, such as shock absorber is interposed between a rear end portion of the transmission case 12 and the body frame 7.

As shown in Figs. 2 and 3, the transmission case 12 is constituted by a right-hand half portion 12a with which a crankcase 14a of the engine 14 is formed integrally and a left-hand half portion 12b for closing an opening (an end portion on the left-hand side of the body) in the right-hand half portion 12a. A noise control exterior cover 12c is mounted on the left-hand half portion 12.

The automatic transmission 13 accommodated in the transmission case 12 comprises a drive pulley 21 (refer to Fig. 2) mounted on a crankshaft 17 of the engine 14, a follower pulley 23 mounted on an output shaft 22 (refer to Fig. 3) at a rear end portion of the transmission case and a dry belt 24 extended between both the pulleys 21, 23 in such a manner as to be wrapped therearound.

The drive pulley 21 is formed by a stationary sheave 25 and a movable sheave 26, which are made to be supported on the crankshaft 17. Both the sheaves 25, 26 are made of aluminum alloy, and air blasting fins are integrally formed on the stationary sheave 25, whereas a cam surface 26a and a guide 26b are formed on the movable sheave 26, the cam surface 26a and the guide 26b constituting a speed change mechanism 28 in cooperation with a cam plate 27 which is contiguous with the movable sheave 26. The transmission case 12 according to the first embodiment is constructed such that when the blasting fins 25a rotate together with the stationary sheave 25, outside air is drawn into the transmission case 12 from an outside air inlet port (not shown) formed in a front portion of the transmission case, whereas air inside the transmission case 12 is discharged from a discharge port, not shown.

The stationary sheave 25 is fixed to the crankshaft 17, and the movable sheave 26 is supported on a sleeve 29 spline fitted on the crankshaft 17 via a bearing 30 in such a manner as to move in an axial direction thereof. The cam plate 27 contiguous with the movable sheave 26 is fixed to the crankshaft 17 and is made to contact the guide 26b of the movable sheave 26 via a slider 27a. Note that a kick starter device 31 is located left to the stationary sheave 25 on the body as shown in Fig.2.

The speed change mechanism 28 adopts a construction in which a plurality of centrifugal rollers 32 are put and held between the cam surface 26a of the movable sheave 26 and the cam plate 27. The centrifugal roller 32 is formed into a cylindrical configuration by a metallic cylinder 32a and a synthetic resin outer cylinder 32b provided on an outer circumferential portion of the metallic cylinder 32a. Adopted for a synthetic resin material forming the outer cylinder 32b is a material having heat resistant and hardwearing properties, as well as self-lubricating properties. 4 6Nylons are used in this embodiment.

As the engine speed of the engine 14 increases, the centrifugal rollers 32 moves radially outwardly of the movable sheave 26 by virtue of centrifugal force, whereby the movable sheave 26 moves leftward as indicated by double-dashed lines in Fig. 2, this increasing the belt wrap contact diameter of the drive pulley 21. On the contrary to this, as the engine speed of the engine 14 decreases, the movable sheave 26 moves rightward, whereby the belt wrap contact diameter of the drive pulley 21 decreases.

The follower pulley 23 adopts a conventionally well known construction and comprises, as shown in Fig. 3, a stationary sheave 36 rotatably supported on the output shaft 22 via bearings 33, 34 and a sleeve 35 and a movable sheave 37 supported axially movably on the sleeve 35. In Fig. 3, a high speed driving condition is illustrated above the output shaft 22, whereas a low speed driving condition including an idling condition is illustrated therebelow.

The stationary sheave 36 and the movable sheave 37 are made of steel material. An input member 38a of a centrifugal clutch 38 is secured to an end portion of the sleeve 35 on the left-hand side of the body, and a compression coil spring 39 is mounted between the input member 38a and the movable sheave 37 in a spring fashion for pressing the movable sheave 37 toward the stationary sheave 36.

In the centrifugal clutch 38, an output member 38b is fixed to an axial end portion of the output shaft 22 and is constructed to cut off the transmission of rotation of the sleeve 35 (rotation of the follower pulley 23) at the time of low engine speeds including idling and to transmit rotation of the sleeve 35 to the output shaft 22 at the time of high engine speeds other than the low engine speeds. An output gear 22a formed on an end portion of the output shaft 22 on a right-hand side of the body is connected with a speed reduction gear 41 on a rear wheel drive axle 40 via an intermediate gear which is not shown.

As shown in Figs. 4 and 5, the dry belt 24 comprises a number of elements 42 and two rings 43 for connecting the elements 42 with each other.

The elements 42 are formed from synthetic resin into a turned-over H-shaped configuration in cross section. The synthetic resin material used to make the elements 42 is nylons 4 and 6 which are the same material as those used to make the outer cylinder 32b of the centrifugal weight 32. Of four arms 42a to 42d formed on the turned-over H-shaped element 42 two arms 42a, 42b located on an upper side in Fig. 4 have, as shown in Fig. 5, elongate projections 44 each having a semi-circular shape in cross section which are formed at lower portions thereof in such a manner as to project downwardly, whereas the other two arms 42c, 42d have elongate projections 45 each having a semi-circular shape in cross section which are formed at upper portions thereof in such a manner as to project upwardly.

The rings 43 are formed by a plurality of core wires 46 made from aramide fibers, coating rubber 47 for retaining the core wires 46 in a state in which they are aligned in a horizontal row and canvas 48 for covering an outer surface of the coating rubber 47 and are fitted in recessed portions 49 formed in side portions of the element 42 in such a manner as to open sideways. The rubber 47 and canvas 48 are made from materials having equal heat resistance properties to those of the 4 6nylons which are used to make the elements 42. The rubber 47 has a number of recessed grooves 47a, 47b formed in parallel to each other so as to fit on the two elongate projections 44, 45 formed on the four arms 42a to 42d of the elements 42.

In the automatic transmission 13 constructed as described heretofore, as the engine 14 starts to be driven, the drive pulley 21 rotates together with the crankshaft 17, and rotation of the drive pulley 21 is then transmitted to the follower pulley 23 via the dry belt 24. When the dry belt 24 rotates, the temperature of the dry belt 24 is increased by friction heat generated through friction against the drive and follower pulleys 21, 23 and flexure of the dry belt. The friction heat is dissipated to air inside the transmission case 12 while the dry belt 24 rotates therein and is transmitted to the drive pulley 21 and the follower pulley 23 from contact portions of the belt with the pulleys through conduction.

In this automatic transmission 13, since the stationary sheave 25 and the movable sheave 26 of the drive pulley 21 are made of aluminum alloy, heat in the elements 42 of the dry belt 24 is easily transmitted to the drive pulley 21. This allows heat in the dry belt 24 to be dissipated from the drive pulley 21 to space surrounding the periphery of the drive pulley 21 in an efficient fashion.

Consequently, when compared with a case in which a steel belt is used, a hydraulic mechanism can be omitted and hence the automatic transmission 13 can be made smaller in size, and when compared with a case in which a conventional V-belt is used, torque to be transmitted can be increased.

A difference in slip ratio between a case where the dry belt 24 according to the first embodiment and a case where a V-belt is used is shown in Fig. 6. In Fig. 6, a slip ratio of the dry belt 24 is shown by a solid line, whereas a slip ratio of the rubber V-belt is shown by a broken line. As is clear from the figure, the slip ratio of the dry belt 24 becomes lower than the slip ratio of the V-belt under a driving condition where the axial - torque is below 2kgm. Due to this, the generation of heat from the belt is suppressed and the durability of the coating rubber is increased, whereby higher efficiency and longer life can be provided by the dry belt when compared with the rubber V-belt.

In addition, since the outer cylinder 32b of the centrifugal roller 32 of the automatic transmission 13 and the elements 42 of the dry belt 24 are made from the same synthetic resin material, both the outer cylinder and the elements are made difficult to be deformed, thereby increasing the heat dissipating capability further.

To cope with wear resulting from slippage taking place when the dry belt 24 is engaged with and disengaged from the pulleys and wear resulting from slippage between the pulley and the centrifugal rollers 32, the pulley can be made of aluminum alloy by making the elements 42 of the dry belt 24 and the outer cylinders 32b from the same kind of synthetic resin material, whereby heat in the dry belt 24 can be dissipated from the pulley, thereby making it possible to improve the durability of the dry belt 24. In addition, the elements 42 of the dry belt 24 are each made from the synthetic resin as an integral part, which can help reduce the weight thereof, and in a motorcycle in which the engine is driven at higher speeds, since the centrifugal force of the belt is reduced, required speed change and torque transmission can be attained sufficiently only with the thrust of the centrifugal rollers 32without using oil pressure. Thus, the transmission can be made smaller in size, whereby the object can be attained without deteriorating the functions of the motorcycle. Moreover, with the right centrifugal rollers 32 even if the centrifugal rollers 32 rotate at higher speeds, speed change can be implemented smoothly and easily.

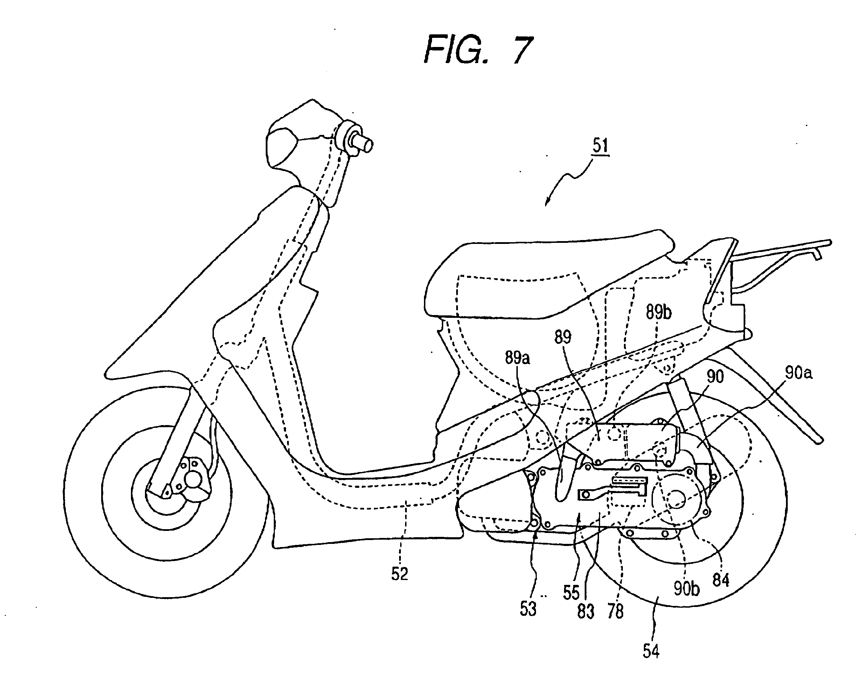

A second embodiment is shown in Figs. 7 to 11.

Firstly, the construction thereof will be described. In Fig. 7, reference numeral 51 denotes a scooter type vehicle having an engine of a small displacement, and in this scooter type vehicle 51, a body frame 52 is provided. A unit swinging engine 53 is disposed on the body frame 52 in such a manner as to swing vertically, and this engine 53 functions as one of constituent elements of a suspension system for suspending a rear wheel 54. A belt transmission 55 according to the second embodiment is provided integrally with the engine 53.

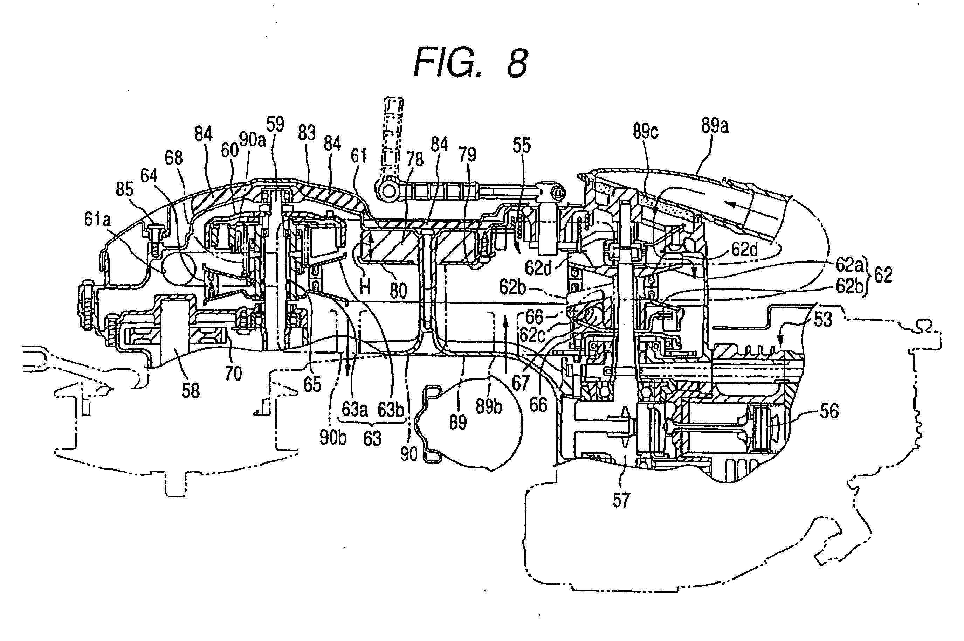

To be specific, as shown in Fig. 8, in the unit swinging engine 53, a piston 56 is connected to a crankshaft 57, and reciprocating motion of the piston 56 is converted into circular motion by the crankshaft 57. Driving force from the crankshaft 57 is transmitted to a rear wheel side pulley shaft 59 via the belt transmission 55, a centrifugal clutch 60 and the like. The driving force so transmitted to the rear wheel side pulley shaft 59 is then transmitted therefrom to a rear wheel drive axle 58 via a speed reduction mechanism 70.

In the belt transmission 55, a drive pulley 62(as a primary pulley) and a follower pulley 63 (as a secondary pulley) are disposed within transmission case 61, and a belt 64 is extended between those pulleys in such a manner as to be wrapped there around.

The pulleys 62, 63 have stationary pulley plates 62a, 63a fixed to the crankshaft 57 and a collar 65 and movable pulley plates 62b, 63b facing the stationary pulley plates 62a, 63a and adapted to move back and forth in axial directions, respectively. The belt 64 is adapted to be held between the stationary pulley plates 62a, 63a and the movable pulley plates 62b, 63b.

Aluminum cast pulley plates are used for the stationary pulley plates 62a, 63a and movable pulley plates 62b, 63b of the respective pulleys 62, 63, and a surface treatment having hard-wearing properties such as chrome plating is applied to the surface of the aluminum cast pulley plates.

An umbrella-like cam member 67 is fixed to the crankshaft 57 on the back of the movable pulley plate 62b of the drive pulley 62. While only one is shown in Fig. 8, a plurality of weights 66 each having a circular cross section are held between the movable pulley plate 62b and the cam member 67 in such a manner as to slide radially and rotate. The weights 66 move as illustrated by double-dashed lines in Fig. 8 by virtue of centrifugal force generated by rotation of the crankshaft 57, whereby the movable pulley plate 62b is moved axially as illustrated by double-dashed lines in Fig. 8. This varies the wrap contact diameter of the belt 24, whereby the rotational speed of the crankshaft 57 is varied.

In addition, the movable pulley plate 63b of the follower pulley 63 is biased by a spring 68 toward the stationary pulley plate 63, and the belt 64 is held between the movable pulley plate 63b and the stationary pulley plate 63a.

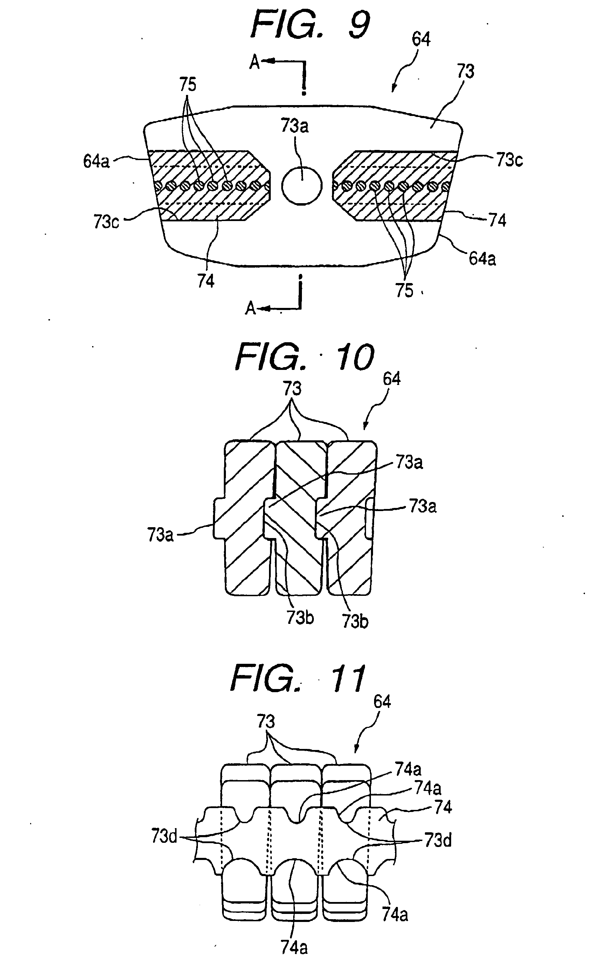

Furthermore, as shown in Figs. 9 to 11, the belt 64 comprises a number of turned-over H-shaped resin blocks 73 which are disposed in a row, and a pair of annular connecting members 74 made from ultra-heat resistant rubber is fitted in these resin blocks 73 from the left and right for connection of the resin blocks 73.

To be specific, polyamide resin is used as a base material of the resin blocks 73 with carbon fibers or aramide fibers being mixed into the polyamide resin as a reinforcement material.

The polyamide resin is a resin which has high heat resistant properties and is strong and bearable to repeated impact load and which can maintain its properties stable over a long period of time, whereas carbon fibers and aramide fibers have high strength and heat resistance.

With these properties of polyamide resin and carbon and aramide fibers the resin blocks 73 becomes superior in heat resistant and hard-wearing properties, as well as fatigue resistant properties.

In addition, as shown in Fig. 10, a locating raised portion 73a is formed at a central portion on one side, whereas a locating recessed portion 73b is formed in a central portion on the other side thereof. When the resin blocks 73 are disposed in alignment in a row, the raised portion 73a of one of adjacent resin blocks 73 is fitted in the recessed portion 73b in the other resin block 73, whereby any deviation in a direction substantially normal to a direction in which the belt 64 extends is designed to be restricted.

As shown in Figs. 9 and 11, a pair of notched recessed portion 73c is formed in sides of the resin block 73, whereby the resin block is formed into a turned-over H-shaped configuration, and the connecting members 74 are fitted in the notched recessed portions 73c.

This connecting member 74 is made from ultra-heat resistant rubber, and a plurality of core wires each having a high tensile strength are embedded in this rubber material. Fitting groove portions 74a are formed in upper and lower portions of the connecting member 34, as shown in Fig. 11, in such a manner as to correspond to the respective resin blocks 73, and fitting projections 73d of the resin blocks 73 are designed to a be fitted in the fitting groove portions 74a.

When the belt 64 constructed as described above is held between the stationary pulley plates 62a, 63a and the movable pulley plates 62b, 63b, inclined surfaces 64a formed both sides of the belt 64 come into surface contact with the stationary pulley plates 62a, 63a and the movable pulley plates 62b, 63b, respectively.

Then, the driving force transmitted from the follower pulley 63 to the collar 65 is transmitted to the rear wheel side pulley shaft 59 via the centrifugal clutch 20. The driving force is then transmitted from the rear wheel side pulley shaft 59 to the rear wheel drive axle 58 via the speed reduction mechanism 70 having a plurality of gears where the speed of the driving force so transmitted thereto is reduced.

In addition, as shown in Fig. 8, a sound absorbing material 78 comprising glass-wool or urethane is disposed along an internal surface of the transmission case 61 incorporating therein the belt 64 and the pulleys 62, 63. This sound absorbing material 78 is disposed between the follower pulley 62 and the drive pulley 63 by means of a presser plate 80 fastened with a screw 79.

Furthermore, a cover 83 for covering the external side of the transmission case 61 is disposed on the external side of the transmission case 61 by being fixed thereto with screws 85. A sound absorbing material 84 comprising glass-wool or urethane is disposed so as to fill a space between the cover 83 and the transmission case 61.

Thus, since the belt 64 is constituted by the plurality of resin blocks 73 connected to each other, the belt 64 is difficult to wear. In addition, the durability thereof is increased, and generation of heat, that would result from deformation of the belt due to the thrust of the pulleys 62, 63, can be suppressed. Moreover, since the resin blocks 73 are made from polyamide resin, the blocks 73 is provided with high heat resistance and becomes strong and bearable to repeated impact load, whereby their own properties can be maintained stable over a long period of time.

In addition, since the belt 64 comprising the resin blocks 73 having no metallic material contained therein is light in weight, there is little increase in thrust by virtue of centrifugal force even if the belt revolves at high rotational speed. Therefore, required load can be obtained sufficiently with the weights 66 without using oil pressure.

Furthermore, since the weights 66 are disposed around the circumference of the crankshaft 57, variation in rotational speed of the crankshaft 57 directly acts on the weights 66. In a quiet driving at low speed, efficient transmission can be attained by suppressing thrust, whereas the thrust of the weights 66 becomes large at the time of acceleration, and transmission free of slippage can be attained.

Thus, since a thrust by the weights 66 is designed to be applied to the belt 64 having the resin blocks 73, the belt transmission according to the embodiments well matches the properties of engines for motorcycles in which a high engine speed driving is regarded as more important than a low torque driving.

On the contrary, noise is easier to be generated from the resin belt 64 than from a rubber one. However, providing the sound absorbing material 78 along the internal surface of the transmission case 61 allows the sound absorbing material 78 to absorb noise, whereby the generation of noise can be suppressed.

In addition, the sound absorbing material 78 can also be disposed between the follower pulley 63 and the drive pulley 62 by using space between both the pulleys 62, 63 effectively. Thus, making use of the relatively wide space allows the disposition of a sound absorbing material 78 having a larger thickness, where by the sound absorbing performance can be increased.

On the other hand, an inlet chamber 89 is connected to the transmission case 61 at a position in the vicinity of the drive pulley 62 via an extension tube 89a which extends substantially vertically. This inlet chamber 89 has a predetermined capacity and is disposed on an upper side of the transmission case 61. An inlet port 89b is formed in the inlet chamber on a transversely inner side thereof.

Additionally, as shown in Fig. 8, a communicating port 61 a is formed in a bottom portion of the transmission case 61 at a position in the vicinity of the follower pulley 63, and a discharge chamber 90 is connected to the communicating port 61 a, as shown in Fig. 7, via an extension tube 90a. This discharge chamber 90 has a predetermined capacity and is disposed on the upper side of the transmission case 61. A discharge port 90b is formed in the discharge chamber on a transversely inner side thereof.

According to the construction as described above, when the engine 53 is driven and the stationary pulley plate 62a of the drive pulley 62 rotates, outside air is drawn into the inlet chamber 89 from the inlet port 89b through rotation of blades 62d of the stationary pulley plate 62a. Then the outside air is drawn into the transmission case 61 from the interior of the inlet chamber 89 via the extension tube 89a and a filter 89c.

On the other hand, air inside the transmission case 61 is discharged into the discharge chamber 90 via the extension tube 90a and is then discharged to the outside of the motorcycle from the discharge port 90b in the discharge chamber 90.

Thus, the interior of the transmission case 61 can be cooled by drawing outside air into the transmission case 61 and discharging air inside the transmission case 61 to the outside of the motorcycle.

In addition, according to the construction, the durability of the belt 64 can be improved by constituting the belt 64 by the number of resin blocks 73. However, since the belt is not a continuous body made from rubber, there is caused the problem that noise is increased. It is confirmed that noise is generated when the belt 64 on the taut side leaves from the follower pulley 63 and that as the belt thrust increases noise becomes louder. However, there is no risk that noise so generated leaks directly to the outside of the motorcycle from the interior of the transmission case 61 via the inlet port 89b or the discharge port 90b, but the noise is first attenuated in the chambers 89, 90 when air passes therethrough on its way to the outside of the motorcycle for discharge before it leaks from the inlet port 89b or the discharge port 90b, whereby noise can be reduced.

Furthermore, the respective chambers 89, 90 are disposed on the upper side of the transmission case 61, and thus, since the space on the upper side of the transmission case 61 can be used effectively, the necessity can be obviated of increasing the width of the motorcycle having a limited space for provision of such components.

Moreover, penetration of water into the transmission case 61 through the inlet port 89 and the discharge port 90 when riding a motorcycle with smaller-diameter wheels on a puddle road can be suppressed by providing the chambers 89, 90 and the inlet port 89b and the discharge port 90b on the upper side of the transmission case 61.

Additionally, since the resin blocks 73 are light in weight and have a reduced friction coefficient when compared to rubber, the thrust of the belt 64 needs to be increased, and therefore, measures against wear need to be taken for the respective pulley plates 62a, 63a, 62b, 63b of the pulleys 62, 63.

To cope with this, in a case where the respective pulley plates 62a, 63a, 62b, 63b, in particular, the respective pulley plates 62a, 62b of the drive pulley 62 are made of a metal having high hardwearing properties such as steel other than light alloy of aluminum, although the drive pulley 62 is directly connected to the crankshaft 57, since the rotational speed of the pulley is increased when in use, the inertia mass is increased and the follow-up qualities to variation in engine speed of the engine 43 is deteriorated, whereby a quick ride feeling is deteriorated in turn.

On the other hand, when the respective pulley plates 62a, 63a, 62b, 63b are made from aluminum, while they become easy to wear, applying a surface treatment to those plates can improve the hardwearing properties thereof.

Furthermore, the resin blocks 73 have small heat conductivity, and therefore, they are heated excessively depending upon conditions, resulting in a case where the expected life cannot be obtained. However, with the pulley plates 62a, 63a, 62b, 63b being made of aluminum material, respectively, heat in the belt 64 is allowed to escape to the pulley plates 62a, 63a, 62b, 63b quickly. Since the heat capacity of the respective pulley plates 62a, 63a, 62b, 63b is made large to make them rigid, good cooling conditions can be provided. Thus, although the connecting members 74 are made from rubber, the life of the belt 64 can be largely extended because the belt 64 is constructed so as to suppress heat generation therein and cooling is improved through the heat dissipating construction.

Incidentally, while application of a generally known surface treatment can provide certain hardwearing properties, since the applied surface treatment is thin, there is no case in which the heat conductivity of the respective pulley plates 62a, 63a, 62b, 63b is affected by the surface treatment. In addition, the resin blocks 73 are not so hard that the required hard-wearing properties can be secured sufficiently only with improvement in the surface treatment.

While the inlet port 89b is connected to the drive pulley 62 side and the discharge port 90b is connected to the follower pulley 63 side in the second embodiment, the ports may be connected in a reverse fashion, that is, the discharge port may be connected to the drive pulley side whereas the inlet port may be connected to the follower pulley side. In addition, since better cooling efficiency can be attained by drawing cooling air from the side of the drive pulley 62 being made of aluminum material, the follower pulley can be made of sheet iron to improve productivity.

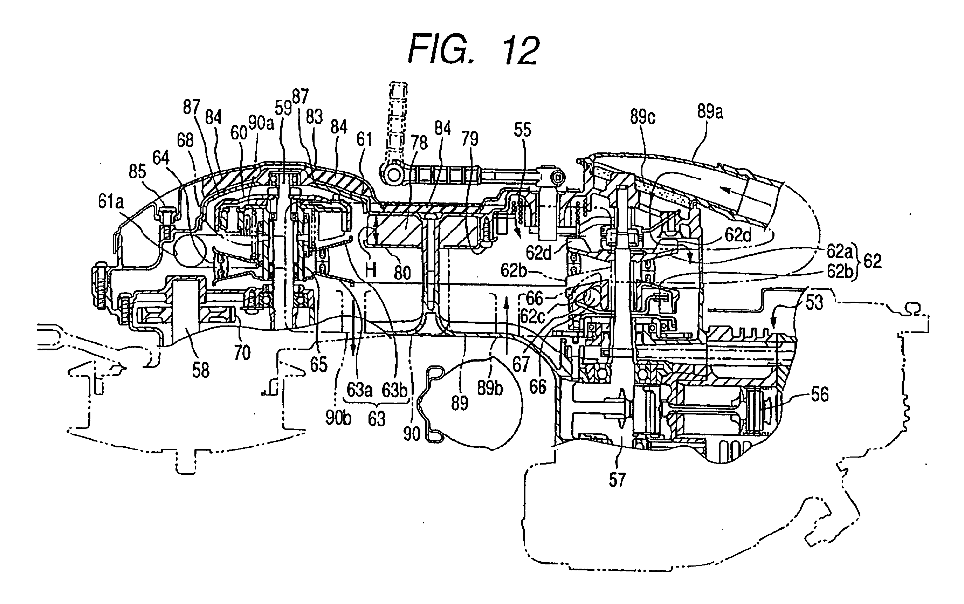

A modification of the above-mentioned second embodiment is shown in Fig. 12.

In this modification, as shown by double-dashed lines in Figs. 12 and 7, a sound absorbing material 84 is disposed around the circumference of the follower pulley 63 in the vicinity of the follower pulley 63.

Since large noise is generated from slipping noise of the follower pulley 63, disposition of the sound absorbing material 84 in the vicinity of the follower pulley 63 can help absorb noise so generated effectively. Moreover, disposition of the sound absorbing material 84 around the circumference of the follower pulley 63 in such a manner as to surround it can absorb noise more effectively.

The other constructions and operations of this modification are similar to those of the second embodiment and therefore the description thereof will be omitted here.

Thus, as has been described heretofore, according to the first embodiment, heat in the synthetic resin elements becomes easy to be transmitted to the drive pulley, and heat is dissipated to the space surrounding the drive pulley when the drive pulley rotates. Due to this, it is ensured that the dry belt comprising the synthetic resin elements and the rings can be cooled, whereby the vehicle automatic transmission can be provided which is small in size and which can transmit large torque.

Furthermore, both the centrifugal rollers and the elements become difficult to be deformed, whereby the heat dissipating properties can be improved.

According to the second embodiment, since the belt is composed of a number of resin blocks connected to each other, when compared with the conventional rubber belt, the belt becomes difficult to wear. Therefore, the durability thereof is increased and heat generation due to deformation can also be suppressed.

In addition, while the resin belt is easier to generate noise through collision of the resin blocks with the other resin blocks when compared with a rubber belt, the sound absorbing material is disposed along the internal surface of the transmission case, so that wall surface vibrations can be suppressed with the sound absorbing material so disposed to reduce the emission of noise. Thus, the construction according to the second embodiment is preferable in particular to motorcycles having limited space.

Additionally, the sound absorbing material can be disposed between the follower pulley and the drive pulley, whereby the space produced between both the pulleys can be used effectively for disposition of the sound absorbing material.

Since large noise is generated from the follower pulley, provision of the sound absorbing material in the vicinity of the follower pulley can help absorb the noise so generated more effectively.

Since large noise is generated from the follower pulley, provision of the sound absorbing material around the circumference of the follower pulley in such a manner as to surround the same can help absorb the noise so generated more effectively.

Furthermore, heat generation due to deformation can be suppressed by constituting the belt by a number of resin blocks which are connected to each other, and hence the durability of the belt so constituted can be improved when compared with a rubber belt.

In addition, according to one embodiment, the resin blocks of the belt are made from polyamide resin, whereby high heat resistant properties are imparted to the resin bocks, the resin blocks are made strong and bearable to repeated impact strength, and their own properties can be maintained stable over a long period of time.

Moreover, since, according to one embodiment, the pair of pulley plates of the drive pulley is made of aluminum material, quick acceleration can be attained, whereby the driving qualities, required for small engine can be attained. In addition, since aluminum material has good heat conductivity, heat in the resin blocks is allowed to escape from the contact surface of the resin blocks to the pulley plates, whereby the cooling properties of the resin blocks can be improved. Consequently, the durability of the belt can be extended.

In addition to the above advantages, the surface treatment providing the hardwearing properties can be applied to the surface of the pulley plates, whereby the wear of the pulley plate can be reduced, this allowing the pulley plate to be used over a long period of time.

Additionally, the belt is made from resin, whereby the durability of the belt can be increased when compared with a rubber belt, and heat generation due to the deformation of the belt can be suppressed.

Furthermore, the belt is made from resin, whereby noise may be generated in the transmission case, in particular, in the vicinity of the follower pulley, however, noise so generated does not leak directly from the interior of the transmission case via the inlet port or the discharge port, but noise may be first attenuated in the chambers when air inside the transmission case passes therethrough on its way to the outside of the motorcycle for discharge before noise leaks from the inlet port or the discharge port to the outside, noise being thereby reduced.

In addition to the above advantage, the chamber is connected to the transmission case at the position in the vicinity of the follower pulley, and the discharge port communicating with the interior of the transmission case is formed in this chamber, whereas the inlet port is formed in the transmission case at the position in the vicinity of the drive pulley, whereby since the drive pulley connected to the crankshaft rotates at all times while the engine is driven, air is drawn effectively from the inlet port connected to the transmission case at the position in the vicinity of the drive pulley, efficient air flow being thereby provided within the transmission case.

In addition to the above advantage, the chamber is, according to one embodiment, connected to the transmission case at the position in the vicinity of the drive pulley, noise leakage from the inlet port can be suppressed.

Furthermore, the respective chambers, according to one embodiment, are disposed on the upper side of the transmission case, whereby the space above the transmission case can be used effectively for disposition of the chambers, the necessity being thereby obviated of expanding the transverse width of the motorcycle having a limited space for disposition of such components.

The embodiments disclosed above refer to a transmission comprising a drive pulley, a follower pulley and a dry belt wrapped around the drive and follower pulleys, wherein the drive pulley has a stationary sheave and a movable sheave that are made of aluminum alloy and the dry belt comprises a number of elements and rings are extended between the drive pulley and a follower pulley in such a manner as to be wrapped therearound. The elements are made from synthetic resin, and the elements are connected to each other by means of the rings.

Accordingly, it is possible to provide a transmission, which can be made smaller in size and improve transmission torque by ensuring that a dry belt is properly cooled.

Particularly, they refer to a vehicle automatic transmission comprising a drive pulley driven by an engine, a follower pulley connected to a drive wheel, and a dry belt wrapped around said drive pulley and said follower pulley, wherein said dry belt comprises a plurality of elements that are made from synthetic resin and are coupled with one another so as to be annular-shaped.

Said dry belt preferably further comprises a ring for connecting said elements to one another.

Said drive pulley preferably comprises a stationary sheave made of aluminum alloy, and a movable sheave made of aluminum alloy and movable relative to said stationary sheave in an axial direction of said drive pulley.

Accordingly, it is further preferable if the vehicle automatic transmission comprises a speed change mechanism including a cam surface formed on said movable sheave and a centrifugal roller that is brought into contact with said cam surface, wherein an outer circumferential portion of said centrifugal roller and said elements of said dry belt are made of the same synthetic resin material.

Moreover, it is beneficial if the vehicle automatic transmission comprises a transmission case accommodating therein said drive pulley, said follower pulley and said dry belt, and a sound absorbing material disposed along an internal surface of said transmission case, and/or if said sound absorbing material is disposed between said follower pulley and said drive pulley, and/or if said sound absorbing material is disposed in the vicinity of said follower pulley.

Additionally, or alternatively, said sound absorbing material can be disposed around said follower pulley.

According to a preferred embodiment, the present vehicle automatic transmission comprises a chamber portion connected to said transmission case at a position in the vicinity of said follower pulley, wherein one of an inlet port and a discharge port communicating with the interior of said transmission case is formed on said chamber portion, and the other is formed on said transmission case at a position in the vicinity of said drive pulley.

Said discharge port may be formed on said chamber portion, and said inlet port is formed on said transmission case and said chamber portion may comprise a first chamber having said discharge port formed therein and disposed on an upper side of said transmission case, and a second chamber connected to said transmission case at a position in the vicinity of said drive pulley and having an inlet port that supplies outside air into said transmission case, wherein said second chamber is disposed on the upper side of said transmission case.

According to a further preferred embodiment of the present vehicle automatic transmission, said drive pulley has a pair of pulley plates between which said dry belt is interposed, and each of said pulley plate has a surface that is subjected to a surface treatment for providing hard-wearing properties.

It is further preferable if said a plurality of elements are made of polyamide resin.

## Claims

1. A belt transmission for use on a motor cycle, comprising a drive pulley (21,62) driven by an engine (14), a follower pulley (23,63) connected to a drive wheel (2), and an annular-shaped dry belt (24,64) wrapped around said drive pulley (21,62) and said follower pulley (23,63), wherein said drive pulley (21,62) comprises a stationary sheave (25,62a), and a movable sheave (26,62b) being movable relative to said stationary sheave (25,62a) in an axial direction of said drive pulley (21,62), **characterized in that** said annular-shaped dry belt (24,64) comprises a plurality of elements (42,73) made from synthetic resin which are coupled with one another, and at least one ring member (43,74) for connecting said elements (42,73) of said dry belt (24,64), and said stationary sheave (25,62a) and movable sheave (26,62b) are made of aluminum alloy.

2. A belt transmission according to claim 1, **characterized in that** each of said elements (42,73) made from synthetic resin is formed as one integral part in a turned over H-shaped configuration in cross direction.

3. A belt transmission according to claim 1 or 2, **characterized in that** said ring member (43,74) comprises a plurality of core wires (46,75) made from aramide fibers arranged in a rubber member (47) being an ultra-heat resistant rubber, for retaining said core wires (46,75).

4. A belt transmission according to claim 3, **characterized by** a canvas (48) for covering an outer surface of said rubber member (47).

5. A belt transmission according to at least one of the preceding claims 1 to 4, **characterized by** two ring members (43,74) fitted in recessed portions (49,73c) formed in side portions of said elements (42,73) made from synthetic resin.

6. A belt transmission according to at least one of the preceding claims 1 to 5, **characterized in that** said follower pulley (23,63) comprises a stationary sheave (36,63a) and a movable sheave (37,63b).

7. A belt transmission according to claim 6, **characterized in that** said stationary sheave (25,62a,36,63a) and/or said movable sheave (26,62b,37,63b) of the drive pulley (21,62) and/or of the follower pulley (23,63) comprise a surface that is subjected to a surface treatment of a chrome plating, for providing hard-wearing properties.

8. A belt transmission according to at least one of the preceding claims 1 to 7, **characterized in that** said synthetic resin of said elements (42,73) is nylons 4, 6 or a polyamide resin having carbon fibers or aramide fibers mixed into said polyamide resin.

9. A belt transmission according to at least one of the preceding claims 1 to 8, **characterized by** a speed change mechanism (28) including a cam surface (26a) formed on said movable sheave (26) and at least one centrifugal roller (32) adapted to be brought into contact with said cam surface (26a), wherein said centrifugal roller (32) comprises an outer cylinder (32b) which is made from said same synthetic resin as said elements (42) of said dry belt (24).

10. A belt transmission according to at least one of the preceding claims 1 to 9, **characterized by** a transmission case (12,61) accommodating said drive pulley (21,62), said follower pulley (23,63) and said dry belt (24,64).

11. A belt transmission according to claim 10, **characterized in that** a sound absorbing material (78), in particular made of glass-wool or urethane, is disposed along an internal surface of said transmission case (61).

12. A belt transmission according to claim 10, **characterized in that** a sound absorbing material (78) is disposed between said follower pulley (63) and said drive pulley (62).

13. A belt transmission according to claim 12, **characterized in that** said sound absorbing material (78) is disposed in said vicinity of said follower pulley (63).

14. A belt transmission according to claim 12 or 13, **characterized in that** said sound absorbing material (78) is disposed around said follower pulley (63).

15. A belt transmission according to at least one of the preceding claims 11 to 14, **characterized by** at least one chamber portion (89,90) connected to said transmission case (61) at a position in said vicinity of said follower pulley (63), wherein one of an inlet port (89b) and a discharge port (90b) communicating with said interior of said transmission case (61) is formed on said chamber portion (89,90) and said respective other is formed on said transmission case (61) at a position in said vicinity of said drive pulley (62).

16. A belt transmission according to claim 15, **characterized in that** said discharge port (90b) is formed on said chamber portion (89,90) and said inlet port (89b) is formed on said transmission case (61).

17. A belt transmission according to claim 15 or 16, **characterized in that** said chamber portion (89,90) comprises a first chamber (90) having said discharge port (90b) formed therein and disposed on an upper side of said transmission case (61) and a second chamber (89) connected to said transmission case (61) at a position in said vicinity of said drive pulley (62) and having an inlet port (89b) that supplies outside air into said transmission case (61), wherein said second chamber (89) is disposed on said upper side of said transmission case (61).

18. A belt transmission according to at least one of the preceding claims 1 to 17, **characterized in that** said belt transmission is a continuously variable automatic transmission.

## Patentansprüche

1. Riemengetriebe für den Gebrauch in einem Motorrad, aufweisend eine Antriebsriemenscheibe (21, 62), angetrieben durch einen Motor (14), eine Abtriebsriemenscheibe (23, 63), verbunden mit einem Antriebsrad (2), und einem ringförmigen, trockenen Riemen (24,64), rund um die Antriebsriemenscheibe (21, 62) und die Abtriebsriemenscheibe (23, 63) geschlungen, wobei die Antriebsriemenscheibe (21, 62) aufweist eine stationäre Scheibe (25, 62a) und eine bewegbare Scheibe (26, 62b), die zu der stationären Scheibe (25, 62a) in einer axialen Richtung der Antriebsriemenscheibe (21, 62) bewegbar ist,
**dadurch gekennzeichnet, dass** der ringförmige, trockene Riemen (24,64) aufweist eine Mehrzahl von Elementen (42, 73), hergestellt aus Kunststoff, die miteinander gekuppelt sind, und zumindest ein Ringteil (43, 74) zum Verbinden der Elemente (42, 73) des trockenen Riemens (24,64), und stationäre Scheibe (25, 62a) und die bewegbare Scheibe (26, 62b) aus einer Aluminiumlegierung hergestellt sind.

2. Riemengetriebe nach Anspruch 1, **dadurch gekennzeichnet, dass** jedes der aus Kunststoff hergestellten Elemente (42, 73) als ein integrales Teil in einer umgekehrten H- Konfiguration in Querrichtung gebildet ist.

3. Riemengetriebe nach Anspruch 1 oder 2, **dadurch gekennzeichnet, dass** das Ringteil (43, 74) aufweist eine Mehrzahl von Kemdrähten (46, 75), hergestellt aus Aramidfasern, angeordnet in einem Gummiteil (47), das ein ultra- wärmebeständiger Gummi ist, zum Halten der Kerndrähte (46, 75).

4. Riemengetriebe nach Anspruch 3, **gekennzeichnet durch** ein Mattgewebe (48) zum Abdecken einer Außenoberfläche des Gummiteils (47).

5. Riemengetriebe nach zumindest einem der vorhergehenden Ansprüche 1 bis 4, **gekennzeichnet durch** zwei Ringteile (43, 74), eingesetzt in ausgesparte Abschnitte (49, 73c), gebildet in Seitenabschnitten der aus Kunststoff hergestellten Elemente (42, 73).

6. Riemengetriebe nach zumindest einem der vorhergehenden Ansprüche 1 bis 5, **dadurch gekennzeichnet, dass** die Abtriebsriemenscheibe (23, 63) eine stationäre Scheibe (36, 63a) und eine bewegbare Scheibe (37, 63b) aufweist.

7. Riemengetriebe nach Anspruch 6, **dadurch gekennzeichnet, dass** die stationäre Scheibe (25, 62a, 36, 63a) und / oder die bewegbare Scheibe (26, 62b, 37, 63b) der Antriebsriemenscheibe (21, 62) und / oder der Abtriebsriemenscheibe (23, 63) eine Oberfläche aufweist, die einer Oberflächenbehandlung eines Chromplattierens unterzogen wird, um Hartverschleißeigenschaften zu schaffen.

8. Riemengetriebe nach zumindest einem der vorhergehenden Ansprüche 1 bis 7, **dadurch gekennzeichnet, dass** der Kunststoff der Elemente (42, 73) Nylon 4, 6 oder ein Polyamid- Kunststoff mit Kohlenstofffasern oder Aramidfasern, gemischt in den Polyamid- Kunststoff, ist.

9. Riemengetriebe nach zumindest einem der vorhergehenden Ansprüche 1 bis 8, **gekennzeichnet durch** eine Drehzahlveränderungsvorrichtung (28), die eine Nockenoberfläche (26a) enthält, gebildet an der bewegbaren Scheibe (26) und zumindest einer Zentrifugalwalze (32), vorgesehen um in Kontakt mit der Nockenoberfläche (26a) gebracht zu sein, wobei die Zentrifugalwalze (32) aufweist einen Außenzylinder (32b), der aus demselben Kunststoff wie die Elemente (42) des trockenen Riemens (24) hergestellt ist.

10. Riemengetriebe nach zumindest einem der vorhergehenden Ansprüche 1 bis 9, **gekennzeichnet durch** ein Getriebegehäuse (12, 61), das die Antriebsriemenscheibe (21, 62), die Abtriebsriemenscheibe (23, 63) und den trockenen Riemen (24, 64) unterbringt.

11. Riemengetriebe nach Anspruch 10, **dadurch gekennzeichnet, dass** ein geräuschabsorbierendes Material (78), insbesondere hergestellt aus Glaswolle oder Urethan, entlang einer inneren Oberfläche des Getriebegehäuses (61) angeordnet ist.

12. Riemengetriebe nach Anspruch 10, **dadurch gekennzeichnet, dass** ein geräuschabsorbierendes Material (78) zwischen der Abtriebsriemenscheibe (63) und der Antriebsriemenscheibe (62) angeordnet ist.

13. Riemengetriebe nach Anspruch 12, **dadurch gekennzeichnet, dass** das geräuschabsorbierende Material (78) in der Nähe der Abtriebsriemenscheibe (63) angeordnet ist.

14. Riemengetriebe nach Anspruch 12 oder 13, **dadurch gekennzeichnet, dass** das geräuschabsorbierende Material (78) rund um die Abtriebsriemenscheibe (63) angeordnet ist.

15. Riemengetriebe nach zumindest einem der vorhergehenden Ansprüche 11 bis 14, **gekennzeichnet durch** zumindest einen Kammerabschnitt (89, 90), verbunden mit dem Getriebegehäuse (61) an einer Position in der Nähe der Abtriebsriemenscheibe (63), wobei eine von einer Einlassöffnung (89b) oder einer Auslassöffnung (90b), die mit dem Inneren des Getriebegehäuses (61) in Verbindung sind, an dem Kammerabschnitt (89, 90) gebildet ist und die jeweils andere an dem Getriebegehäuse (61) an einer Position in der Nähe der Antriebsriemenscheibe (62) gebildet ist.

16. Riemengetriebe nach Anspruch 15, **dadurch gekennzeichnet, dass** die Auslassöffnung (90b) an dem Kammerabschnitt (89, 90) gebildet ist und die Einlassöffnung (89b) an dem Getriebegehäuse (61) gebildet ist.

17. Riemengetriebe nach Anspruch 15 oder 16, **dadurch gekennzeichnet, dass** der Kammerabschnitt (89, 90) aufweist eine erste Kammer (90) mit der darin gebildeten Auslassöffnung (90b) und die auf einer oberen Seite des Getriebegehäuses (61) angeordnet ist und eine zweite Kammer (89), verbunden mit dem Getriebegehäuse (61) an einer Position in der Nähe der Antriebsriemenscheibe (62) und die eine Einlasslassöffnung (89b) hat, die Außenluft in das Getriebegehäuse (61) zuführt, wobei die zweite Kammer (89) auf der oberen Seite des Getriebegehäuses (61) angeordnet ist.

18. Riemengetriebe nach zumindest einem der vorhergehenden Ansprüche 1 bis 17, **dadurch gekennzeichnet, dass** das Riemengetriebe ein stufenlos veränderbares, automatisches Getriebe ist.

## Revendications

1. Transmission à courroie destinée à être utilisée avec une motocyclette, comprenant une poulie d'entraînement (21, 62) entraînée par un moteur (14), une poulie entraînée (23, 63) raccordée à une roue motrice (2), et une courroie sèche de forme annulaire (26, 64) enveloppée autour de ladite poulie d'entraînement (21, 62) et de ladite poulie entraînée (23, 63), dans laquelle ladite poulie d'entraînement (21, 62) comprend une roue à gorge stationnaire (25, 62a), et une roue à gorge mobile (26, 62b) pouvant être déplacée par rapport à ladite roue à gorge stationnaire (25, 62a) dans une direction axiale de ladite poulie d'entraînement (21, 62), **caractérisée en ce que** ladite courroie sèche de forme annulaire (24, 64) comprend une pluralité d'éléments (42, 73) fabriqués en résine synthétique qui sont couplés les uns aux autres, et au moins un élément annulaire (43, 74) destiné à raccorder lesdits éléments (42, 73) de ladite courroie sèche (24, 64), et lesdites roue à gorge stationnaire (25, 62a) et roue à gorge mobile (26, 62b) sont fabriquées en alliage d'aluminium.

2. Transmission à courroie selon la revendication 1, **caractérisée en ce que** chacun desdits éléments (42, 73) fabriqué en résine synthétique est formé d'un seul tenant selon une configuration en forme de H retourné en section transversale.

3. Transmission à courroie selon la revendication 1 ou 2, **caractérisée en ce que** ledit élément annulaire (43, 74) comprend une pluralité de câbles formant noyaux (46, 75) fabriquées à partir de fibres d'aramide agencées dans un élément caoutchouteux (47) qui est un caoutchouc résistant à la ultra haute température, pour retenir lesdits câbles noyaux (46, 75).

4. Transmission à courroie selon la revendication 3, **caractérisée par** un canevas (48) pour recouvrir une surface externe dudit élément caoutchouteux (47).

5. Transmission à courroie selon l'une quelconque des revendications 1 à 4, **caractérisée par** deux éléments annulaires (43, 74) montés dans des parties évidées (49, 73c) formées dans les parties latérales desdits éléments (42, 73) fabriqués en résine synthétique.

6. Transmission à courroie selon l'une quelconque des revendications 1 à 5, **caractérisée en ce que** ladite poulie entraînée (23, 63) comprend une roue à gorge stationnaire (36, 63a) et une roue à gorge mobile (37, 63b).

7. Transmission à courroie selon la revendication 6, **caractérisée en ce que** ladite roue à gorge stationnaire (25, 62a, 36, 63a) et/ou ladite roue à gorge mobile (26, 62b, 37, 63b) de la poulie d'entraînement (21, 62) et/ou de la poulie entraînée (23, 63) comprennent une surface qui est soumise à un traitement de surface tel que le chromage, pour lui conférer des propriétés de résistance à l'usure.

8. Transmission à courroie selon l'une quelconque des revendications 1 à 7, **caractérisée en ce que** ladite résine synthétique desdits éléments (42, 73) est le nylon 4, 6 ou une résine polyamide ayant des fibres de carbone ou des fibres d'aramide mélangées à l'intérieur de ladite résine polyamide.

9. Transmission à courroie selon l'une quelconque des revendications 1 à 8, **caractérisée par** un mécanisme de changement de vitesse (28) comportant une surface de came (26a) formée sur ladite roue à gorge mobile (26) et au moins un galet centrifuge (32) adapté pour être amené en contact avec ladite surface de came (26a), dans laquelle ledit galet centrifugeur (32) comprend un cylindre externe (32b) qui est fabriqué à partir de ladite même résine synthétique que lesdits éléments (42) de ladite courroie sèche (24).

10. Transmission à courroie selon l'une quelconque des revendications 1 à 9, **caractérisée par** un boîtier de transmission (12, 61) logeant ladite poulie d'entraînement (21, 62), ladite poulie entraînée (26, 63) et ladite courroie sèche (24, 64).

11. Transmission à courroie selon la revendication 10, **caractérisée en ce qu'**un matériau absorbant les sons (78), en particulier fabriqué en laine de verre ou en uréthane, est disposé le long d'une surface interne dudit carter de transmission (61).

12. Transmission à courroie selon la revendication 10, **caractérisée en ce qu'**un matériau absorbant les sons (78) est disposé entre ladite poulie entraînée (63) et ladite poulie d'entraînement (62).

13. Transmission à courroie selon la revendication 12, **caractérisée en ce que** ledit matériau absorbant les sons (78) est disposé audit voisinage de ladite poulie entraînée (63).

14. Transmission à courroie selon la revendication 12 ou 13, **caractérisée en ce que** ledit matériau absorbant les sons (78) est disposé autour de ladite poulie entraînée (63).

15. Transmission à courroie selon au moins l'une des revendications 11 à 14, **caractérisée par** au moins une partie de chambre (89, 90) raccordée audit carter de transmission (61) en une position audit voisinage de ladite poulie entraînée (63), dans laquelle un parmi un orifice d'admission (89b) et un orifice d'évacuation (90b) communiquant avec ledit intérieur dudit carter de transmission (61) est formé sur ladite partie de chambre (89, 90) et ledit autre orifice respectif est formé sur ledit carter de transmission (61) en une position audit voisinage de ladite poulie d'entraînement (62).

16. Transmission à courroie selon la revendication 15, **caractérisée en ce que** ledit orifice d'évacuation (90b) est formé sur ladite partie de chambre (89, 90) et ledit orifice d'admission (89b) est formé sur ledit carter de transmission (61).

17. Transmission à courroie selon la revendication 15 ou 16, **caractérisée en ce que** ladite partie de chambre (89, 90) comprend une première chambre (90) présentant ledit orifice d'évacuation (90b) formé à l'intérieur de celle-ci et disposée sur un côté supérieur dudit carter de transmission (61) et une seconde chambre (89) raccordée audit carter de transmission (61) en une position audit voisinage de ladite poulie d'entraînement (62) et présentant un orifice d'admission (89b) qui amène l'air extérieur à l'intérieur du carter de transmission (61), dans laquelle ladite seconde chambre (89) est disposée sur ledit côté supérieur dudit carter de transmission (61).

18. Transmission à courroie selon au moins l'une des revendications 1 à 17, **caractérisée en ce que** ladite courroie de transmission est une transmission automatique à variation continue.
